# EUROPEAN PATENT SPECIFICATION

(11) **EP 1 924 480 B1**
(45) Date of publication and mention of the grant of the patent: **11.11.2009**
(21) Application number: 06791918.3
(22) Date of filing: 07.09.2006
(51) Int. Cl.: B62B 9/20

(54) **GRIP DEVICE, PARTICULARLY FOR PUSHCHAIRS, PRAMS AND THE LIKE**
GREIFVORRICHTUNG, INSBESONDERE FÜR SPORTWAGEN, KINDERWAGEN UND DERGLEICHEN
DISPOSITIF DE PREHENSION, EN PARTICULIER POUR CHAISES ROULANTS, LANDAUS ET AUTRES DISPOSITIFS DE CE TYPE

(30) Priority: 14.09.2005 IT VR20050107
(43) Date of publication of application: 28.05.2008
(73) Proprietor: L'Inglesina Baby S.p.A., 36077 Altavilla Vicentina (IT)
(72) Inventor: TOMASI, Ivan, I-36050 Sovizzo (IT); GORZA, Roberto, I-32032 Feltre (IT)
(74) Representative: Modiano, Micaela Nadia
(86) International application number: PCT/EP2006/008747
(87) International publication number: WO 2007/031232

(56) References cited:
- US-A1- 2005 121 882

## Description

### Technical Field

The present invention relates to a grip device, particularly for pushchairs, prams and the like.

### Background Art

Currently, some frames for pushchairs and prams are provided with a grip device which lies between the two ends of the handle tubes that are arranged upwardly during use, connecting them to each other.

Such a grip device is known from US 2005/0121882, which forms the closest prior art.

These kinds of grip device allow, in some circumstances, more convenient use, since they can be gripped for example with just one hand.

However, although such grip devices are now widely used, they suffer drawbacks especially if they are fitted to frames for pushchairs of the type known as "umbrella-folding" due to the particular manner in which they close.

Such pushchair frames in fact fold both transversely and longitudinally (therefore in three dimensions) until they assume, when closed, a shape which can be likened to that of a closed umbrella.

It is evident that if,the grip device described above is to be associated with umbrella-folding frames, it is necessary to provide such device in two or more connecting portions, which are rotatably articulated to each other so as to allow the transition of the frame from the extended condition to the collapsed condition. In any case, it is evident that in order to ensure sufficient rigidity of the grip device during use (and therefore when the frame is in the extended condition), it is advantageous to provide on such grip device means for locking mutual rotation among the different connecting portions.

Several constructive solutions have been proposed in this regard but they have not proved to be free from drawbacks.

The most widely used solutions connect to each other the connecting portions that constitute the grip device by means of joints between which locking elements, which can be actuated manually by the user, act.

Although such solutions allow to obtain, when the frame is in the extended position, a certain rigidity of the grip device, they have a certain awkwardness in use, because the user is forced, after placing the frame in the extended condition, to act on the locking elements in order to lock each joint. The same action must of course be performed before placing the frame in the collapsed condition.

### Disclosure of the Invention

The aim of the present invention is to eliminate or at least reduce drastically the drawbacks noted currently in grip devices particularly for pushchairs, prams and the like described above.

Within this aim, an object of the invention is to provide a grip device which has such features as to allow simplification of the operations for opening and closing the frame with which it is associated.

Another object of the present invention is to provide a grip device that is easy to use and offers the greatest assurances of reliability during operation.

Still another object of the invention is to provide a grip device which is constructively very simple and has a low production cost, so that its use is advantageous also from an economical standpoint.

This aim and these and other objects are achieved by a grip device 1, particularly for pushchairs, prams and the like, comprising a connecting body 2 provided with a plurality of connecting elements 20, which comprise two connecting ends 2d, which are coupled to a respective connecting element 3 formed at a respective side 4 of a frame 10 for pushchairs, prams and the like, and at least two connecting portions 2a, 2b, 2c, which are articulated to each other and connect said two connecting ends 2d, characterized in that it comprises reaction means 5, which act between at least one pair of said connecting elements 20 and are adapted to reverse the action applied to said at least one pair of connecting elements 20 during the transition of said frame 10 from an extended condition to a collapsed condition and vice versa.

### Brief Description of the Drawings

Further characteristics and advantages will become better apparent from the description of some preferred but not exclusive embodiments of a grip device according to the invention, illustrated by way of non-limiting example in the accompanying drawings, wherein:
Figure 1 is a perspective view of a frame of the umbrella-folding type provided with a grip device according to the invention, and in the extended condition;
Figure 2 is a perspective view of said frame in the collapsed condition;
Figure 3 is a view of the frame of Figures 1 and 2 in an intermediate condition, during transition from the extended condition to the collapsed condition;
Figure 4 is a top elevation view of the grip device associated with the portion of the handle tubes that is arranged upwardly during use;
Figure 5 is a sectional view, shown in turn in partial cross-section, of the grip device, taken along a plane of arrangement identified by the line V-V of Figure 4, with the frame in the extended condition;
Figure 6 is a sectional view, similar to Figure 5, but with the frame in an intermediate condition;
Figure 7 is a sectional view, similar to those shown in Figures 5 and 6, but with the frame in a collapsed condition;

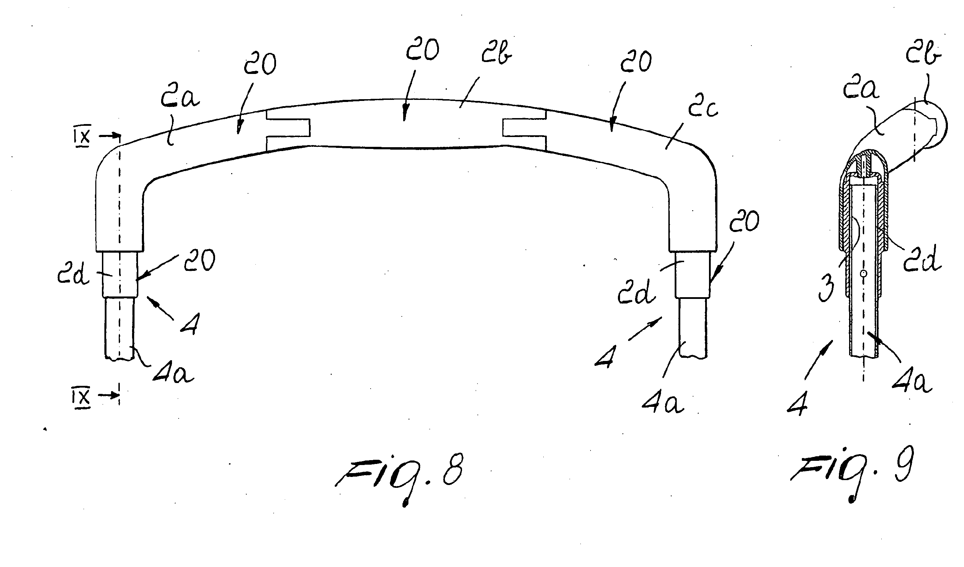

Figure 8 is an enlarged-scale view of the grip device similar to that shown in Figure 4;
Figure 9 is a sectional view of the grip device, taken along a plane of arrangement identified by the line IX-IX of Figure 8;
Figure 10 is an enlarged-scale sectional view of the region of articulation between two connecting portions of the connecting body, with the frame in an extended condition;
Figure 11 is a sectional view of the grip device, taken along a plane of arrangement identified by the line XI-XI of Figure 5.

In the examplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

### Ways of carrying out the Invention

With reference to the figures; a grip device, particularly for pushchairs, prams and the like, is designated generally by the reference numeral 1 and comprises a connecting body 2, which is composed of a plurality of connecting elements 20.

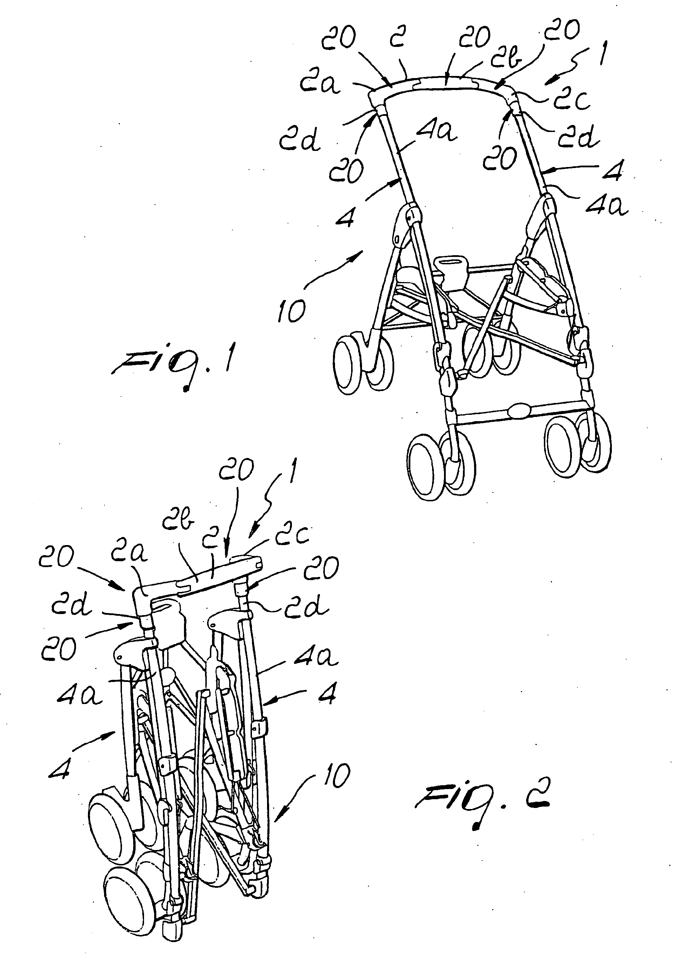

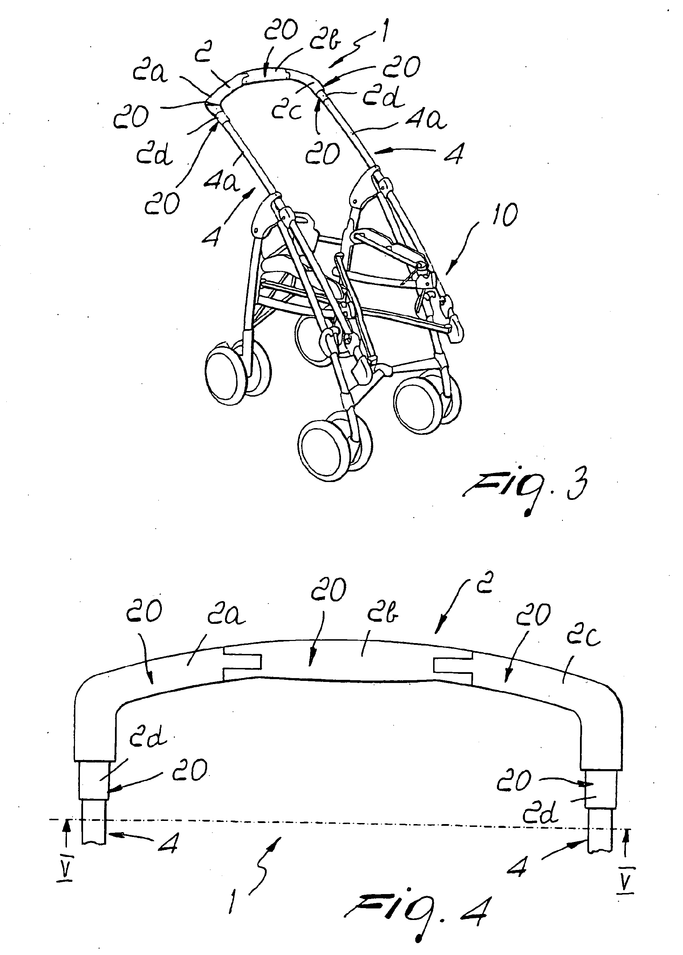

In particular, the connecting elements 20 comprise two connecting ends 2d, which are coupled, as described in greater detail hereinafter, to a respective connecting element 3, which is formed at a respective side 4 of a frame 10 for pushchairs, prams and the like: with reference to the embodiment shown in Figures 1 to 3, the frame 10 can be of the so-called umbrella-folding type and the connecting elements 3 can, in this and other cases, be constituted by the ends of the handle tubes 4a of said frame 10 that are arranged upwardly during use.

The connecting body 2 comprises at least two mutually articulated connecting portions 2a, 2b.

According to the invention, the grip device 1 is provided with reaction means 5, which act between at least one pair 2a,2b; 2b,2c; 2a,2d; 2c,2d of the connecting elements 20 that form the connecting body 2.

In particular, the reaction means 5 are adapted to reverse the action applied to the respective connecting elements 20 during the transition of the frame 10 from the extended condition to the collapsed condition and vice versa.

According to a first embodiment, shown in the figures, the connecting elements 20 to which the reaction means 5 apply their action are constituted by one or more pairs of connecting portions 2a,2b; 2b,2c.

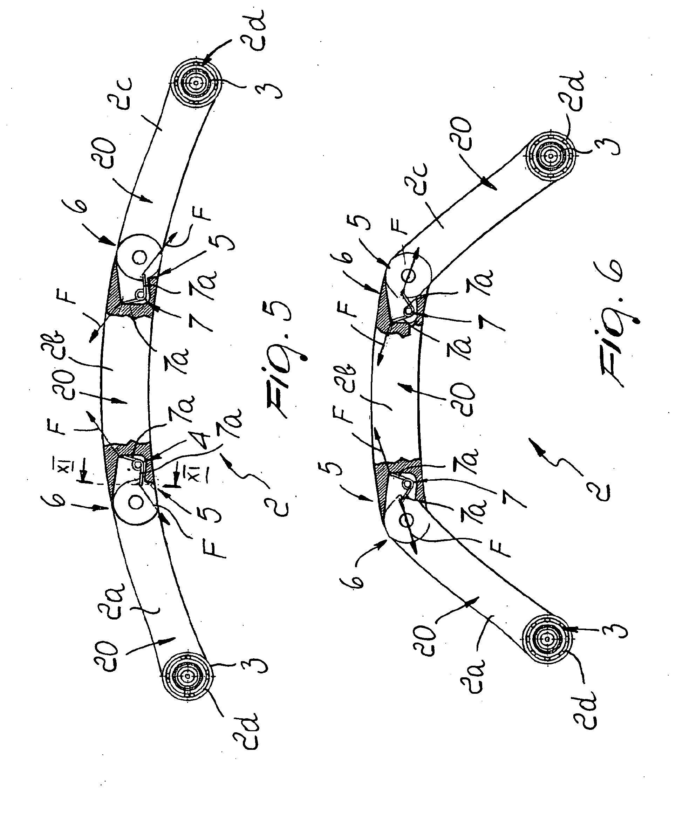

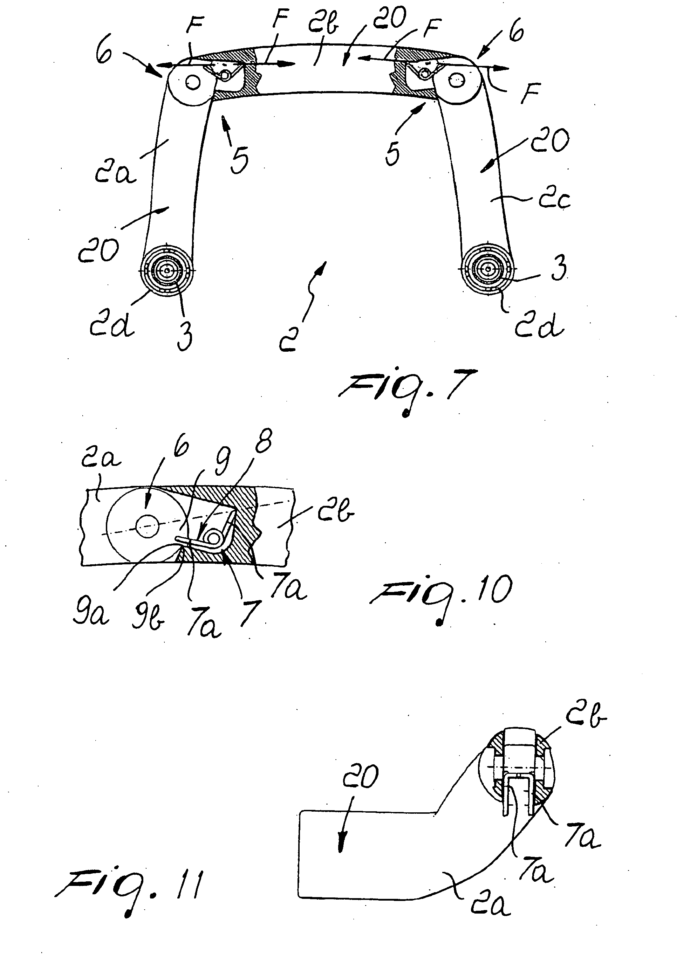

In particular, it can be seen that the reaction means 5 are adapted to apply to a respective pair of connecting portions 2a,2b; 2b,2c an action (shown schematically by the arrows F) which tends to move closer one another the two connecting ends 2d of the connecting body 2 when the frame 10 is (as shown in Figure 7) proximate to its collapsed condition; the reaction means 5 instead apply an action (again shown schematically by the arrows F) which tends to move mutually apart the two connecting ends 2d of the connecting body 2 when the frame 10 (as shown schematically in Figure 5) moves proximate to its extended condition.

Advantageously, the pair or pairs of connecting portions 2a,2b; 2b,2c are constituted by a first connecting portion 2a and a second connecting portion 2b, which are arranged sequentially and can rotate with respect to each other about a respective pivoting node 6.

In greater detail, the reaction means 5, during the transition of the frame 10 from the extended condition to the collapsed condition and vice versa, are in practice adapted to reverse the pushing action on the respective connecting portions 2a,2b; 2b,2c about the respective pivoting node 6, so as to ensure reversal of the torque applied to said connecting portions 2a,2b; 2b,2c about the respective pivoting node 6.

According to a preferred embodiment, shown moreover in Figures 5 to 7, the reaction means can be provided by using a trap spring 7, the pusher ends 7a whereof engage a respective insertion portion formed on the respective connecting portions 2a,2b; 2b,2c.

As an alternative, the reaction means 5 can be constituted by a cam device, which has a device body which is rigidly coupled to a first connecting portion 2a and a movable head which acts on the other connecting portion 2b or vice versa.

According to another embodiment, the reaction means 5 can be obtained by means of a flat spring, the pusher ends whereof engage a respective pusher portion supported by a respective connecting portion 2a,2b; 2b,2c.

According to this embodiment, the two connecting ends 2d of the connecting body 2 are coupled rotatably to the respective connecting element 3 formed on a respective side 4 of the frame 10.

In particular, the two connecting ends 2d of the connecting body 2 are usually free to rotate with respect to the respective connecting element 3 about an axis which is parallel to the longitudinal axis of the handle tube 4a.

According to a possible variation, the ends 2d for connecting the connecting body 2 to the sides 4 can be (rotationally) rigidly coupled to the connecting elements 3: in this case, nothing prevents said connecting ends 2d from being constituted directly by the upper free ends of the handle tubes 4a and in general of the sides 4.

In this case, the reaction means 5 might act between at least one of the connecting ends 2d and the connecting portion 2a or 2c that is associated therewith. The coupling between the connecting ends 2d and the connecting portion 2a, 2c associated therewith can be provided by providing the connecting end 2d with a cylindrical head having a substantially circular transverse cross-section and by providing the connecting portion 2a, 2c associated therewith with a cup-shaped end, which has a slightly larger outside diameter than the diameter of the cylindrical head. In this manner, the relative motion of the connecting portion 2a, 2c with respect to the connecting end 2d with which it is associated is allowed about a rotational axis which coincides substantially with the longitudinal axis of the cylindrical head and of the cup-shaped end. In this case, the reaction means can be obtained by providing a cam device, which has a device body which is rigidly coupled for example to the cylindrical head and a movable head which rotates rigidly with the cup-shaped end.

Advantageously, the connecting body 2 comprises three connecting portions 2a, 2b, 2c, which form two pairs 2a,2b; 2b,2c of connecting portions which are articulated to each other by means of a respective pivoting node 6.

According to another important aspect, between at least one pair of connecting elements 20 which are mutually arranged in sequence, and advantageously between one or more pairs of the connecting portions 2a,2b; 2b,2c, there are means 8 for locking the relative rotation between said pairs of connecting elements 20 about the respective pivoting node 6. In particular, said locking means 8 are adapted to lock the relative rotation between the two connecting elements 20 in the direction of rotation that occurs during the transition of the frame 10 from the collapsed condition to the extended condition.

The locking means 8 can be constituted by at least one locking tooth 9, which is formed on a first connecting portion 2a which has an abutment portion 9a designed to abut, when the frame assumes substantially the extended condition, against an abutment portion 9b formed on the other connecting portion 2b.

Operation of the grip device 1 according to the present invention is directly derivable from what has been described above.

In particular when for example the frame 10 is in the extended condition (as shown in Figure 1), the grip device 1 is in the condition shown in the sectional view of Figure 5. In this situation, the reaction means 5 tend to apply to the connecting portions 2a, 2b, 2c an action which tends to keep the connecting ends 2d of the connecting body 2 mutually spaced, ensuring sufficient rigidity and stability to the grip device 1.

When the user wishes to move the frame 10 to the collapsed condition, he does not need to worry about the grip device 1, but he simply has to act on the frame 10. In a first step of closure, the action that the reaction means 5 apply to the pairs of connecting portions 2a, 2b, 2c must be overcome, but once the intermediate point (shown in the sectional view of Figure 6) has been passed, the reaction means 5 themselves tend to facilitate the closure of the frame 10 by applying to the respective pairs of connecting portions an action adapted to move mutually closer the connecting ends 2d and therefore the sides 4 of the frame 10.

All the characteristics of the invention indicated above as advantageous, convenient or the like may also be omitted or be replaced with equivalents.

The invention thus conceived is susceptible of numerous modifications and variations, all of which are within the scope of the appended claims.

Moreover, nothing prevents the reaction means 5 from being constituted by one or more pneumatic pistons in which the body and the stem are respectively associated rotatably with the pairs of connecting portions 2a,2b; 2b,2c.

In practice it has been found that the invention has achieved the intended aim and objects in all its embodiments.

In particular, it has been found that the use of the described reaction means ensures, when the frame is in the extended condition, a sufficient rigidity of the grip device without having to actuate and deactivate complex locking elements.

Moreover, it has been observed that the reaction elements are capable of assisting the user during the operations for opening and closing the frame.

In practice, the materials used, as well as the dimensions, may be any according to requirements.

Thus, for example, it has been found that the springs that can be used for this purpose can be of different kinds; mention is made, in addition to the trap springs shown in the drawings, of flat springs shaped so as to be elastically deformable: among the many, mention is made of metallic ones but also of plastic ones.

The disclosures in Italian Patent Application No. VR2005A000107 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A grip device (1), particularly for pushchairs, prams and the like, comprising a connecting body (2) provided with a plurality of connecting elements (20), which comprise two connecting ends (2d), which are coupled to a respective connecting element (3) formed at a respective side (4) of a frame (10) for pushchairs, prams and the like, and at least two connecting portions (2a, 2b, 2c), which are articulated to each other and connect said two connecting ends (2d), **characterized in that** it comprises reaction means (5), which act between at least one pair of said connecting elements (20) and are adapted to reverse the action applied to said at least one pair of connecting elements (20) during the transition of said frame (10) from an extended condition to a collapsed condition and vice versa.

2. The grip device (1) according to claim 1, **characterized in that** said at least one pair of connecting elements comprises at least two connecting portions (2a, 2b; 2b, 2c).

3. The grip device (1) according to one or more of the preceding claims, **characterized in that** said at least one pair of connecting elements comprises at least one connecting end (2d) and the connecting portion (2a, 2c) associated therewith.

4. The grip device (1) according to one or more of the preceding claims, **characterized in that** said reaction means (5) are adapted to apply to said at least one pair of connecting portions (2a, 2b) an action which tends to move mutually closer the two connecting ends (2d) of said connecting body (2) proximate to said collapsed condition of said frame (10) and an action which tends to move mutually apart the two connecting ends (2d) of said connecting body (2) proximate to said extended condition of said frame (10).

5. The grip device (1) according to one or more of the preceding claims, **characterized in that** said at least one pair of connecting portions (2a, 2b) comprises a first connecting portion and a second connecting portion, which are arranged sequentially and can rotate with respect to each other about a respective pivoting node (6).

6. The grip device (1) according to one or more of the preceding claims, **characterized in that** said reaction means (5), during the transition from said extended condition to said collapsed condition and vice versa, are adapted to reverse the pushing action on the respective connecting portions (2a, 2b, 2c) which constitute said at least one pair of connecting portions (2a, 2b; 2b, 2c) about the respective pivoting node (6), so as to ensure the reversal of the torque applied to said connecting portions (2a, 2b, 2c) about the respective pivoting node (6).

7. The grip device (1) according to one or more of the preceding claims, **characterized in that** said reaction means (5) comprise a trap spring (7), the pusher ends (7a) whereof engage a respective insertion portion formed in said at least two connecting portions (2a, 2b, 2c).

8. The grip device (1) according to one or more of the preceding claims, **characterized in that** said reaction means (5) comprise a cam device, which is provided with a device body which is rigidly coupled to a first connecting portion (2a) of said at least one pair of connecting portions (2a, 2b), and a movable head, which acts on the other connecting portion (2b) of said at least one pair of connecting portions (2a, 2b).

9. The grip device (1) according to one or more of the preceding claims, **characterized in that** said reaction means (5) comprise a flat spring whose pusher ends engage a respective pusher portion supported by said pair of connecting portions (2a, 2b).

10. The grip device (1) according to one or more of the preceding claims, **characterized in that** said two connecting ends (2d) of said connecting body (2) are coupled rotatably to a respective connecting element (3) formed on a respective side (4) of said frame (10).

11. The grip device (1) according to one or more of the preceding claims, **characterized in that** said two connecting ends (2d) of said connecting body (2) can rotate freely with respect to a respective connecting element (3) formed on a respective side (4).

12. The grip device (1) according to one or more of the preceding claims, **characterized in that** said connecting body (2) comprises three connecting portions (2a, 2b, 2c), which form two pairs of connecting portions (2a, 2b; 2b, 2c) which are mutually articulated.

13. The grip device (1) according to one or more of the preceding claims, **characterized in that** it comprises, between at least one pair of said connecting elements (20) which are mutually arranged in sequence, means (8) for locking the relative rotation between said at least one pair of connecting elements (20) in the direction of rotation that occurs during the transition of said frame (10) from said collapsed condition to said extended condition.

14. The grip device (1) according to one or more of the preceding claims, **characterized in that** said locking means (8) are adapted to lock the relative rotation between at least one pair of connecting portions (2a, 2b; 2b, 2c) about the respective pivoting node (6).

15. The grip device (1) according to one or more of the preceding claims, **characterized in that** said locking means (8) are adapted to lock the relative rotation between a connecting end (2d) and the connecting portion (2a, 2c) associated therewith.

16. The grip device (1) according to one or more of the preceding claims, **characterized in that** said locking means (8) comprise at least one locking tooth (9), which is formed on a first connecting portion (2a) and has an abutment portion (9a) which is designed to abut, when the frame substantially assumes said extended condition, against an abutment portion (9b) which is provided on the other connecting portion (2b).

## Patentansprüche

1. Greifvorrichtung, insbesondere für Sportwagen, Kinderwagen und dergleichen, welche einen Verbindungskörper (2) enthält, welcher mit einer Mehrzahl von Verbindungselementen (20), welche zwei Verbindungsenden (2d) enthalten, welche an einem jeweiligen Verbindungselement (3) gekoppelt sind, welches an einer jeweiligen Seite (4) von einem Rahmen (10) für Sportwagen, Kinderwagen und dergleichen ausgebildet ist, und zumindest zwei Verbindungsabschnitten (2a, 2b, 2c), welche zueinander beweglich sind und die zwei Verbindungsenden (2d) verbinden, bereitgestellt ist, **dadurch gekennzeichnet, dass** sie Reaktionselemente (5) enthält, welche zwischen zumindest einem Paar von den Verbindungselementen (20) wirken und dazu ausgelegt sind, die Wirkung, welche auf das zumindest eine Paar von Verbindungselementen (20) während des Überganges des Rahmens (10) von einem ausgestreckten Zustand zu einem zusammengelegten Zustand und umgekehrt angelegt ist, umzukehren.

2. Greifvorrichtung (1) nach Anspruch 1, **dadurch gekennzeichnet, dass** das zumindest eine Paar von Verbindungselementen zumindest zwei Verbindungsabschnitte (2a, 2b; 2b, 2c) enthält.

3. Greifvorrichtung (1) nach einem der vorangehenden Ansprüche, **dadurch gekennzeichnet, dass** das zumindest eine Paar von Verbindungselementen zumindest ein Verbindungsende (2d) und den Verbindungsabschnitt (2a, 2c) in Zusammenhang damit enthält.

4. Greifvorrichtung (1) nach einem der vorangehenden Ansprüche, **dadurch gekennzeichnet, dass** die Reaktionselemente (5) dazu ausgelegt sind, an das zumindest eine Paar von Verbindungsabschnitten (2a, 2b) eine Wirkung, welche dazu neigt, die zwei Verbindungsenden (2d) von dem Verbindungskörper (2), nahe dem zusammengelegten Zustand von dem Rahmen (10), gegenseitig näher zu bewegen, und eine Wirkung anzulegen, welche dazu neigt, die zwei Verbindungsenden (2d) von dem Verbindungskörper (2), nahe dem ausgestreckten Zustand von dem Rahmen (10), gegenseitig voneinander fort zu bewegen.

5. Greifvorrichtung (1) nach einem der vorangehenden Ansprüche, **dadurch gekennzeichnet, dass** zumindest ein Paar von Verbindungsabschnitten (2a, 2b) einen ersten Verbindungsabschnitt und einen zweiten Verbindungsabschnitt enthält, welche sequenziell angeordnet sind und in Bezug zueinander um eine jeweilige Schwenkverbindung (6) drehen können.

6. Greifvorrichtung (1) nach einem der vorangehenden Ansprüche, **dadurch gekennzeichnet, dass** die Reaktionselemente (5) während des Überganges von dem ausgestreckten Zustand zu dem zusammengelegten Zustand und umgekehrt dazu ausgelegt sind, die Druckwirkung auf die jeweiligen Verbindungsabschnitte (2a, 2b, 2c), welche das zumindest eine Paar von Verbindungsabschnitten (2a, 2b; 2b, 2c) bilden, um die jeweilige Schwenkverbindung (6) umzukehren, um somit die Umkehr des Drehmomentes, welches an die Verbindungsabschnitte (2a, 2b, 2c) um die jeweilige Schwenkverbindung (6) angelegt ist, sicherzustellen.

7. Greifvorrichtung (1) nach einem der vorangehenden Ansprüche, **dadurch gekennzeichnet, dass** die Reaktionselemente (5) ein Tellereisen (7) enthalten, wobei die Ausstoßerenden (7a) davon einen jeweiligen Einrückabschnitt, welcher in den zumindest zwei Verbindungsabschnitten (2a, 2b, 2c) ausgebildet ist, in Eingriff nehmen.

8. Greifvorrichtung (1) nach einem der vorangehenden Ansprüche, **dadurch gekennzeichnet, dass** die Reaktionselemente (5) eine Nockenvorrichtung enthalten, welche mit einem Vorrichtungskörper, welcher mit einem ersten Verbindungsabschnitt (2a) von dem zumindest einen Paar von Verbindungsabschnitten (2a, 2b) starr gekoppelt ist, und einem bewegbaren Kopf, welcher auf dem weiteren Verbindungsabschnitt (2b) von dem zumindest einen Paar von Verbindungsabschnitten (2a, 2b) wirkt, bereitgestellt ist.

9. Greifvorrichtung (1) nach einem der vorangehenden Ansprüche, **dadurch gekennzeichnet, dass** die Reaktionselemente (5) eine Blattfeder enthalten, deren Ausstoßerenden einen jeweiligen Ausstoßerabschnitt, welcher durch das Paar von Verbindungsabschnitten (2a, 2b) gehalten ist, in Eingriff nehmen.

10. Greifvorrichtung (1) nach einem der vorangehenden Ansprüche, **dadurch gekennzeichnet, dass** die zwei Verbindungsenden (2d) von dem Verbindungskörper (2) an einem jeweiligen Verbindungselement (3), welches an einer jeweiligen Seite (4) von dem Rahmen (10) ausgebildet ist, drehbar gekoppelt sind.

11. Greifvorrichtung (1) nach einem der vorangehenden Ansprüche, **dadurch gekennzeichnet, dass** sich die zwei Verbindungsenden (2d) von dem Verbindungskörper (2) mit Bezug auf ein jeweiliges Verbindungselement (3), welches an einer jeweiligen Seite (4) ausgebildet ist, frei umdrehen können.

12. Greifvorrichtung (1) nach einem der vorangehenden Ansprüche, **dadurch gekennzeichnet, dass** der Verbindungskörper (2) drei Verbindungsabschnitte (2a, 2b, 2c) enthält, welche zwei Paare von Verbindungsabschnitten (2a, 2b; 2b, 2c), welche gegenseitig beweglich sind, ausbilden.

13. Greifvorrichtung (1) nach einem der vorangehenden Ansprüche, **dadurch gekennzeichnet, dass** sie zwischen zumindest einem Paar von den Verbindungselementen (20), welche gegenseitig in Folge angeordnet sind, Elemente (8) zum Verriegeln der relativen Umdrehung zwischen dem zumindest einen Paar von Verbindungselementen (20) in jene Umdrehungsrichtung, welche während des Überganges des Rahmens (10) von dem zusammengelegten Zustand zu dem erstreckten Zustand auftritt, enthält.

14. Greifvorrichtung (1) nach einem der vorangehenden Ansprüche, **dadurch gekennzeichnet, dass** die Verriegelungselemente (8) dazu ausgelegt sind, um die relative Umdrehung zwischen zumindest einem Paar von Verbindungsabschnitten (2a, 2b; 2b, 2c) um die jeweilige Schwenkverbindung (6) zu verriegeln.

15. Greifvorrichtung (1) nach einem der vorangehenden Ansprüche, **dadurch gekennzeichnet, dass** die Verriegelungselemente (8) dazu ausgelegt sind, um die relative Umdrehung zwischen einem Verbindungsende (2d) und dem Verbindungsabschnitt (2a, 2c) in Zusammenhang damit zu verriegeln.

16. Greifvorrichtung (1) nach einem der vorangehenden Ansprüche, **dadurch gekennzeichnet, dass** die Verriegelungselemente (8) zumindest einen Verriegelungszahn (9) enthalten, welcher auf einem ersten Verbindungsabschnitt (2a) ausgebildet ist und einen Anschlagabschnitt (9a) hat, welcher derart entworfen ist, um gegen einen Anschlagabschnitt (9b), welcher an dem weiteren Verbindungsabschnitt (2b) bereitgestellt ist, anzuschlagen, wenn der Rahmen im Wesentlichen den erweiterten Zustand annimmt.

## Revendications

1. Guidon (1), en particulier pour voitures pour enfants, poussettes et similaires, comprenant un corps de liaison (2), qui est pourvu d'une pluralité d'éléments de liaison (20) comportant deux extrémités de liaison (2d), lesquelles sont respectivement couplées à un élément de liaison correspondant (3) conçu respectivement sur un côté (4) d'un cadre (10) pour voitures pour enfants, poussettes et similaires, et au moins deux portions de liaison (2a, 2b, 2c) qui sont articulées l'une à l'autre et relient les deux extrémités de liaison (2d), **caractérisé en ce qu'**il comprend des moyens de réaction (5), qui agissent entre au moins une paire des dits éléments de liaison (20) et sont adaptés à renverser l'action exercée sur l'au moins une paire d'éléments de liaison (20) au cours de la transition du dit cadre (10) d'un état déployé à un état plié et vice versa.

2. Guidon (1) suivant la revendication 1, **caractérisé en ce que** la dite au moins une paire d'éléments de liaison comprend au moins deux portions de liaison (2a, 2b ; 2b, 2c).

3. Guidon (1) suivant une ou plusieurs des revendications précédentes, **caractérisé en ce que** la dite au moins une paire d'éléments de liaison comprend au moins une extrémité de liaison (2d) et la portion de liaison (2a, 2c) associée.

4. Guidon (1) suivant une ou plusieurs des revendications précédentes, **caractérisé en ce que** les dits moyens de réaction (5) sont adaptés à exercer sur la dite au moins une paire de portions de liaison (2a, 2b), une action qui tend à rapprocher, l'une de l'autre, les deux extrémités de liaison (2d) du dit corps de liaison (2), à peu près vers le dit état plié du dit cadre (10) et une action qui tend à éloigner, l'une de l'autre, les deux extrémités de liaison (2d) du dit corps de liaison (2), à peu près vers le dit état déployé du dit cadre (10).

5. Guidon (1) suivant une ou plusieurs des revendications précédentes, **caractérisé en ce que** la dite au moins une paire de portions de liaison (2a, 2b) comprend une première portion de liaison et une seconde portion de liaison disposées contiguës et prouvant tourner l'une par rapport à l'autre autour d'un organe pivotant (6).

6. Guidon (1) suivant une ou plusieurs des revendications précédentes, **caractérisé en ce que** les dits moyens de réaction (5) sont adaptés à renverser, au cours de la transition du dit état déployé au dit état plié et vice versa, l'action de poussée sur les portions de liaison respectives (2a, 2b, 2c), qui constituent la dite au moins une paire de portions de liaison (2a, 2b; 2b, 2c), autour de l'organe pivotant respectif (6), de manière à assurer l'inversion du couple exercé aux dites portions de liaison (2a, 2b, 2c) autour de l'organe pivotant (6) respectif.

7. Guidon (1) suivant une ou plusieurs des revendications précédentes, **caractérisé en ce que** les dits moyens de réaction (5) comprennent un ressort en V (7), dont les extrémités poussantes (7a) sont en prise avec une portion d'insertion correspondante conçue dans les dites au moins deux portions de liaison (2a, 2b, 2c).

8. Guidon (1) suivant une ou plusieurs des revendications précédentes, **caractérisé en ce que** les dits moyens de réaction (5) comprennent un dispositif de came pourvu d'un corps de dispositif, qui est couplé de manière rigide à une première portion de liaison (2a) de la dite au moins une paire de portions de liaison (2a, 2b) et une tête mobile qui agit sur l'autre portion de liaison (2b) de la dite au moins une paire de portions de liaison (2a, 2b).

9. Guidon (1) suivant une ou plusieurs des revendications précédentes, **caractérisé en ce que** les dits moyens de réaction (5) comprennent un ressort plat, dont les extrémités poussantes sont en prise avec une portion poussante correspondante, supportée par la dite paire de portions de liaison (2a, 2b).

10. Guidon (1) suivant une ou plusieurs des revendications précédentes, **caractérisé en ce que** les dites deux extrémités de liaison (2d) du dit corps de liaison (2) sont couplées de façon rotative à un élément de liaison correspondant (3) conçu respectivement sur un côté (4) du dit cadre (10),

11. Guidon (1) suivant une ou plusieurs des revendications précédentes, **caractérisé en ce que** les dites deux extrémités de liaison (2d) du dit corps de liaison (2) peuvent tourner librement par rapport à un élément de liaison correspondant (3) conçu respectivement sur un côté (4).

12. Guidon (1) suivant une ou plusieurs des revendications précédentes, **caractérisé en ce que** le dit corps de liaison (2) comprend trois portions de liaison (2a, 2b, 2c) formant deux paires de portions de liaison (2a, 2b ; 2b, 2c) articulées l'une à l'autre.

13. Guidon (1) suivant une ou plusieurs des revendications précédentes, **caractérisé en ce qu'**il comprend, entre au moins une paire des dits éléments de liaison (20) qui sont disposés de façon contiguë, l'un à l'autre, des moyens (8) servant à verrouiller la rotation relative entre la dite au moins une paire d'éléments de liaison (20) dans le sens de la rotation ayant lieu au cours de la transition du dit cadre (10) du dit état plié vers le dit état déployé.

14. Guidon (1) suivant une ou plusieurs des revendications précédentes, **caractérisé en ce que** les dits moyens de verrouillage (8) sont adaptés à verrouiller la rotation relative entre au moins une paire de portions de liaison (2a, 2b; 2b, 2c) autour de l'organe pivotant (6) respectif.

15. Guidon (1) suivant une ou plusieurs des revendications précédentes, **caractérisé en ce que** les dits moyens de verrouillage (8) sont adaptés à verrouiller la rotation relative entre une extrémité de liaison (2d) et la portion de liaison (2a, 2c) associée.

16. Guidon (1) suivant une ou plusieurs des revendications précédentes, **caractérisé en ce que** les dits moyens de verrouillage (8) comprennent au moins une dent de verrouillage (9), qui est conçue sur la première portion de liaison (2a) et qui présente une portion de butée (9a) destinée à buter contre une portion de butée (9b) pourvue sur l'autre portion de liaison (2b), lorsque le cadre adopte substantiellement le dit état déployé.
